# EUROPEAN PATENT SPECIFICATION

(11) **EP 4 549 519 B1**
(45) Date of publication and mention of the grant of the patent: **23.09.2026**
(21) Application number: 24835739.4
(22) Date of filing: 29.02.2024
(51) Int. Cl.: C08K 3/22, C08K 3/28, C08L 101/00, C08J 5/18, C08K 5/541, C08K 7/18, C08L 83/04, C09K 5/14

(54) **THERMALLY CONDUCTIVE COMPOSITION, THERMALLY CONDUCTIVE SHEET USING SAME, AND PRODUCTION METHOD THEREFOR**
WÄRMELEITENDE ZUSAMMENSETZUNG, WÄRMELEITENDE FOLIE DAMIT UND HERSTELLUNGSVERFAHREN DAFÜR
COMPOSITION THERMOCONDUCTRICE, FEUILLE THERMOCONDUCTRICE L'UTILISANT, ET PROCÉDÉ DE PRODUCTION ASSOCIÉ

(30) Priority: 06.07.2023 JP 2023111523
(43) Date of publication of application: 07.05.2025
(73) Proprietor: Fuji Polymer Industries Co., Ltd., Nagoya-shi, Aichi 450-0002 (JP)
(72) Inventor: KATO, Takatsugu, Nagoya-shi Aichi 463-0026 (JP)
(74) Representative: Dehns
(86) International application number: PCT/JP2024/007512
(87) International publication number: WO 2025/009216

(56) References cited:
- WO-A1-2017/203924
- WO-A1-2018/074247
- WO-A1-2020/116057
- WO-A1-2021/256391
- WO-A1-2022/215510
- WO-A1-2022/249754
- JP-A- 2020 073 626
- JP-A- 2020 090 584
- JP-A- 2023 026 805

## Description

### Technical Field

The present invention relates to a thermally conductive composition suitable as a material to be interposed between a heat generating member and a heat dissipator in electrical and electronic components and the like, a thermally conductive sheet formed using the thermally conductive composition, and a method for producing the thermally conductive sheet.

### Background Art

Recent dramatic improvement in performance of semiconductor devices such as CPUs has led to a considerable increase in the amount of heat generated by them. On this account, electronic components that generate heat are equipped with a heat dissipator, and a thermally conductive sheet is used to improve the adhesion between a semiconductor device and a heat dissipating portion. As devices become smaller, more sophisticated, and more highly integrated, there is an increasing demand for a flexible thermally conductive sheet having a high thermal conductivity. Polysiloxane compositions containing aluminum nitride particles having a larger particle size and aluminum nitride particles or alumina particles having a smaller particle size have been proposed in Japanese Patent Nos. 6246986 and 7039157. Thermally conductive polysiloxane compositions containing aluminum nitride particles have been proposed in Japanese Patent Nos. 7082563 and 7205554.

### Disclosure of Invention

The present invention provides a thermally conductive composition containing:
a matrix resin (component A) made of a thermosetting resin;
a curing catalyst; and
thermally conductive particles (component B),
wherein the thermally conductive particles (component B) are blended in an amount of 1500 to 3000 parts by mass with respect to 100 parts by mass of the matrix resin (component A),
the thermally conductive particles (component B) include the following components B-1, B-2, B-3, and B-4,
the thermally conductive particles (component B) include, relative to a total amount of the thermally conductive particles (component B) taken as 100 mass%:
   10 to 20 mass% of aluminum nitride having a median diameter (D50) of less than 20 µm (component B-1);
   3 to 9 mass% of aluminum nitride having a median diameter (D50) of 20 µm or more (component B-2);
   50 to 60 mass% of alumina having a median diameter (D50) of 60 to 80 µm (component B-3); and
   11 to 37 mass% of alumina having a median diameter (D50) of less than 60 µm (component B-4), and
   a blending ratio (B-1)/(B-2) of the component B-1 to the component B-2 in terms of mass is 1.2 to 3.

### Brief Description of Drawings

[FIG. 1] FIG. 1 is a schematic cross-sectional view illustrating how a thermally conductive sheet is used in an embodiment of the present invention.
[FIG. 2] FIG. 2 is a scanning electron microscope (SEM) image of spherical alumina (B-3, D50 = 75 µm) according to an embodiment of the present invention.
[FIG. 3] FIG. 3 is a scanning electron microscope (SEM) image of roundish AlN (B-1, D50 = 5 µm) of the present invention.
[FIG. 4] FIG. 4 is a scanning electron microscope (SEM) image of irregularly-shaped alumina (B-4, D50 = 4 µm) of the present invention.
[FIG. 5] FIG. 5 is a schematic cross-sectional side view of a compressive load measuring device used in an example of the present invention.
[FIG. 6] FIGs. 6A to 6B are schematic diagrams illustrating a method for measuring the thermal conductivity of a sample in an example of the present invention.

### Description of the Invention

However, conventional thermally conductive compositions and thermally conductive sheets formed using such compositions have a problem in that the higher the thermal conductivity, the higher the compressive load and the degree of plasticity.

In order to solve the above-described problem in the conventional art, the present invention provides a thermally conductive sheet that has a high thermal conductivity with the compressive load and the degree of plasticity being kept low, a thermally conductive composition used as a raw material of the thermally conductive sheet, and a method for producing the thermally conductive sheet.

The thermally conductive composition of the present invention is a thermally conductive composition containing: a matrix resin (component A) made of a thermosetting resin; a curing catalyst; and thermally conductive particles (component B), wherein the thermally conductive particles (component B) are blended in an amount of 1500 to 3000 parts by mass with respect to 100 parts by mass of the matrix resin (component A), the thermally conductive particles (component B) include the following components B-1, B-2, B-3, and B-4, the thermally conductive particles (component B) include, relative to a total amount of the thermally conductive particles (component B) taken as 100 mass%:
10 to 20 mass% of aluminum nitride having a median diameter (D50) of less than 20 µm (component B-1);
3 to 9 mass% of aluminum nitride having a median diameter (D50) of 20 µm or more (component B-2);
50 to 60 mass% of alumina having a median diameter (D50) of 60 to 80 µm (component B-3); and
11 to 37 mass% of alumina having a median diameter (D50) of less than 60 µm (component B-4), and
a blending ratio (B-1)/(B-2) of the component B-1 to the component B-2 in terms of mass is 1.2 to 3.

The thermally conductive sheet of the present invention includes the above-described thermally conductive composition and has been formed into a sheet.

The method for producing a thermally conductive sheet of the present invention includes the steps of: vacuum defoaming the above-described thermally conductive composition; rolling the defoamed thermally conductive composition to form the thermally conductive composition into a sheet; and then heat-curing the sheet to produce a thermally conductive sheet.

By employing the above-described composition, the present invention can provide a thermally conductive sheet that has a high thermal conductivity with the compressive load and the degree of plasticity being kept low, a thermally conductive composition used as a raw material of the thermally conductive sheet, and a method for producing the thermally conductive sheet. Specifically, the degree of plasticity of the thermally conductive composition after defoaming and before curing is preferably 60 or less, a cured product of the thermally conductive composition preferably exhibits an instantaneous load value of 1000 N or less when a piece of the cured product having a diameter of 28.6 mm and a thickness of 2 mm is compressed to 50%, and the thermal conductivity is preferably 7 W/m·K or more. The thermally conductive sheet production method of the present invention uses the thermally conductive composition of the present invention, which has a low degree of plasticity and good formability, and thus can perform continuous sheet forming.

The present invention relates to a thermally conductive composition containing a matrix resin (component A), a curing catalyst (component C), and thermally conductive particles (component B).

### <Matrix resin (component A)>

The matrix resin is made of a thermosetting resin. The thermosetting resin may be, for example, a silicone resin, an epoxy resin, a phenol resin, an unsaturated polyester resin, a melamine resin, an acrylic resin, a silicone resin, or a fluorocarbon resin, and preferably is the silicone resin. The thermosetting resin may be in the form of rubber, elastomer, gel, putty, or grease. Specific examples of the thermosetting resin include silicone rubber, silicone gel, acrylic rubber, and fluorocarbon rubber. The silicone resin may be cured using any method, such as the use of peroxide, an addition reaction, or a condensation reaction. The silicone resin is preferable as the thermosetting resin because of its high heat resistance. The matrix resin is preferably made of at least one selected from the group consisting of an addition curable silicone polymer, a peroxide curable silicone polymer, and a condensation silicone polymer. The silicone resin is preferably an addition curable silicone resin because the addition curable silicone resin is not corrosive to the surroundings, releases little by-products to the outside of the system, and ensures deep curing.

The matrix resin preferably further contains a silane coupling agent. Specifically, the silane coupling agent is preferably added in an amount of 0.1 to 10 parts by mass and more preferably 0.5 to 7 parts by mass with respect to 100 parts by mass of the matrix resin. With this composition, the surface of the thermally conductive particles (component B) is coated with the silane coupling agent (surface treatment), thereby allowing the matrix resin (component A) to be filled with the thermally conductive particles more easily (i.e., functioning as a plasticizer) and preventing the adsorption of the curing catalyst (component C) onto the thermally conductive particles (component B) to prevent the occurrence of inhibition of curing. When the matrix resin further contains the silane coupling agent, there is an advantage that the storage stability of the thermally conductive composition is enhanced.

The silane coupling agent may be, for example, a silane compound represented by the formula R(CH₃)ₐSi(OR')₄₋ₐ (where R represents an unsubstituted or substituted organic group having 1 to 20 carbon atoms, R' represents an alkyl group having 1 to 4 carbon atoms, and a represents 0 or 1) or a partial hydrolysate thereof. Examples of the silane compound represented by R(CH₃)ₐSi(OR')₄₋ₐ (where R represents an unsubstituted or substituted organic group having 1 to 20 carbon atoms, R' represents an alkyl group having 1 to 4 carbon atoms, and a represents 0 or 1) (simply referred to as "silane" hereinafter) include silane compounds such as methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, and octadecyltriethoxysilane. One of the above-described silane compounds may be used alone, or two or more of them may be used in combination.

The matrix resin preferably contains a base polymer component (component A1) and a crosslinking component (A2).

### (1) Base polymer component (component A1)

The base polymer component is, for example, an organopolysiloxane having two or more silicon-bonded alkenyl groups per molecule. The organopolysiloxane is the main agent (base polymer component) of the matrix resin in the present invention. In the organopolysiloxane having two or more silicon-bonded alkenyl groups per molecule, the alkenyl groups are each an alkenyl group having 2 to 8 carbon atoms, in particular 2 to 6 carbon atoms, such as a vinyl group or an allyl group. The viscosity of the organopolysiloxane is desirably 10 to 1,000,000 mPa·s and particularly desirably 100 to 100,000 mPa·s at 25°C from the viewpoint of workability and curability.

Specifically, an organopolysiloxane having alkenyl groups bonded to silicon atoms that are at both ends of the molecular chain per molecule as represented by the following general formula (I) can be used. Such an organopolysiloxane is a linear organopolysiloxane whose side chains are capped with alkyl groups. The viscosity of the organopolysiloxane is desirably 10 to 1,000,000 mPa·s at 25°C from the viewpoint of workability and curability. This linear organopolysiloxane may have a small amount of branched structures (trifunctional siloxane units) in the molecular chain.

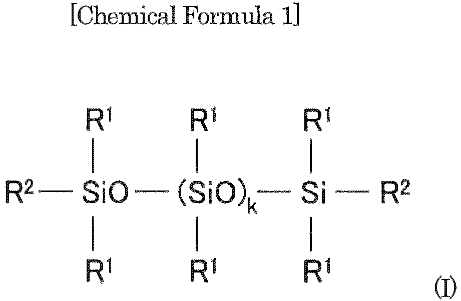

In the above formula,
R¹s may be the same or different from each other and each represent an unsubstituted or substituted monovalent hydrocarbon group having no aliphatic unsaturated bond,
R² represents an alkenyl group, and
k represents 0 or a positive integer.

In the general formula (I), the unsubstituted or substituted monovalent hydrocarbon group having no aliphatic unsaturated bond as R¹ is preferably a hydrocarbon group having, for example, 1 to 10 carbon atoms, in particular, 1 to 6 carbon atoms. Specific examples of the unsubstituted monovalent hydrocarbon group having no aliphatic unsaturated bond include: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; and aralkyl groups such as benzyl, phenylethyl, and phenylpropyl groups. Specific examples of the substituted monovalent hydrocarbon group having no aliphatic unsaturated bond include: the above-described unsubstituted monovalent hydrocarbon groups in which at least one or all of hydrogen atoms are substituted by a halogen atom such as fluorine, bromine, or chlorine or by a cyano group, including: for example, halogen-substituted alkyl groups such as chloromethyl, chloropropyl, bromoethyl, and trifluoropropyl groups; and cyanoethyl groups.

In the general formula (I), the alkenyl group as R² is preferably an alkenyl group having, for example, 2 to 6 carbon atoms, in particular, 2 to 3 carbon atoms. Specific examples of the alkenyl group include vinyl, allyl, propenyl, isopropenyl, butenyl, isobutenyl, hexenyl, and cyclohexenyl groups, and a vinyl group is preferable.

In the general formula (I), k represents 0 or a positive integer, preferably 0 or a positive integer satisfying 0 ≤ k ≤ 10,000, more preferably an integer satisfying 5 ≤ k ≤ 2,000, and still more preferably an integer satisfying 10 ≤ k ≤ 1,200.

As the component A1, the following organopolysiloxane also may be used in combination with the above-described organopolysiloxane: an organopolysiloxane having 3 or more, typically 3 to 30, and preferably about 3 to 20 silicon-bonded alkenyl groups per molecule, in which the alkenyl groups are each an alkenyl group having 2 to 8 carbon atoms, in particular 2 to 6 carbon atoms, such as a vinyl group or an allyl group. The molecular structure of the organopolysiloxane to be used in combination may be a linear, cyclic, branched, or three-dimensional network structure. The organopolysiloxane to be used in combination is preferably a linear organopolysiloxane in which the main chain is composed of repeating diorganosiloxane units and both ends of the molecular chain are capped with triorganosiloxy groups and that has a viscosity of 10 to 1,000,000 mPa·s, in particular 100 to 100,000 mPa·s, at 25°C.

In the organopolysiloxane having two or more silicon-bonded alkenyl groups per molecule, each alkenyl group may be bonded to any part of the molecule. For example, the organopolysiloxane may include alkenyl groups bonded to either a silicon atom that is at the end of the molecular chain or a silicon atom that is not at the end (but in the middle) of the molecular chain. In particular, a linear organopolysiloxane having 1 to 3 alkenyl groups on a silicon atom at each end of the molecular chain as represented by the following general formula (II) and having a viscosity of 10 to 1,000,000 mPa·s at 25°C is desirable from the viewpoint of workability and curability. However, if the sum of the alkenyl groups bound to the silicon atoms that are at both ends of the molecular chain is one or two in this linear organopolysiloxane, the linear organopolysiloxane preferably has at least one alkenyl group bound to a silicon atom that is not at the ends (but in the middle) of the molecular chain as a substituent in a diorganosiloxane unit. This linear organopolysiloxane may have a small amount of branched structures (trifunctional siloxane units) in the molecular chain.

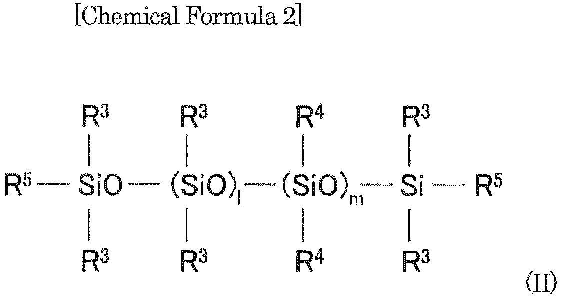

In the above formula,
R³s may be the same or different from each other and each represent an unsubstituted or substituted monovalent hydrocarbon group, and at least one R³ is an alkenyl group,
R⁴s may be the same or different from each other and each represent an unsubstituted or substituted monovalent hydrocarbon group having no aliphatic unsaturated bond,
R⁵ represents an alkenyl group, and
l and m each independently represent 0 or a positive integer.

In the general formula (II), the unsubstituted or substituted monovalent hydrocarbon group as R³ is preferably a hydrocarbon group having, for example, 1 to 10 carbon atoms, in particular, 1 to 6 carbon atoms. Specific examples of the unsubstituted monovalent hydrocarbon group include: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and alkenyl groups such as vinyl, allyl, propenyl, isopropenyl, butenyl, hexenyl, cyclohexenyl, and octenyl groups. Specific examples of the substituted monovalent hydrocarbon group include: the above-described unsubstituted monovalent hydrocarbon groups in which at least one or all of hydrogen atoms are substituted by a halogen atom such as fluorine, bromine, or chlorine or by a cyano group, including, for example: halogen-substituted alkyl groups such as chloromethyl, chloropropyl, bromoethyl, and trifluoropropyl groups; and cyanoethyl groups.

In the general formula (II), the unsubstituted or substituted monovalent hydrocarbon group having no aliphatic unsaturated bond as R⁴ is also preferably a hydrocarbon group having 1 to 10 carbon atoms, in particular, 1 to 6 carbon atoms. Specific examples of the unsubstituted or substituted monovalent hydrocarbon group having no aliphatic unsaturated bond as R⁴ are the same as those given above for the unsubstituted or substituted monovalent hydrocarbon group having no aliphatic unsaturated bond as R¹, excluding the alkenyl groups.

In the general formula (II), the alkenyl group as R⁵ is preferably an alkenyl group having, for example, 2 to 6 carbon atoms, in particular, 2 to 3 carbon atoms. Specific examples of the alkenyl group are the same as those given above for R² in the above formula (I), and a vinyl group is preferable.

In the general formula (II), 1 and m each independently represent 0 or a positive integer and preferably 0 or a positive integer satisfying 0 < 1 + m ≤ 10,000. Preferably, they each independently represent an integer satisfying 5 ≤ l + m ≤ 2,000, more preferably 10 ≤ l + m ≤ 1,200, and also satisfying 0 < l/(l + m) ≤ 0.2, more preferably 0.0011 ≤ l/(l + m) ≤ 0.1.

### (2) Crosslinking component (component A2)

The crosslinking component as the component A2 of the present invention is, for example, an organohydrogenpolysiloxane. This organohydrogenpolysiloxane acts as a crosslinking agent. A cured product is formed through an addition reaction (hydrosilylation) between SiH groups in this organohydrogenpolysiloxane and alkenyl groups in the organopolysiloxane as the component A1. Any organohydrogenpolysiloxane having two or more silicon-bonded hydrogen atoms (i.e., SiH groups) per molecule can be used as the crosslinking component (component A2). The molecular structure of this organohydrogenpolysiloxane may be a linear, cyclic, branched, or three-dimensional network structure. An organohydrogenpolysiloxane in which the number of silicon atoms per molecule (i.e., the degree of polymerization) is 2 to 1,000, in particular, around 2 to 300, can be preferably used as the crosslinking component (component A2).

The organohydrogenpolysiloxane includes SiH groups, as described above. In the organohydrogenpolysiloxane, the positions of the SiH groups are not limited to any particular positions, and the SiH groups may be either at the ends or not at the ends (but in the middle) of the molecular chain. Examples of a silicon-bonded organic group other than the hydrogen atom include the same unsubstituted or substituted monovalent hydrocarbon group having no aliphatic unsaturated bond as those given above as examples of R¹ in the above general formula (I).

The organohydrogenpolysiloxane as the component A2 may be an organohydrogenpolysiloxane represented by the following formula (III).

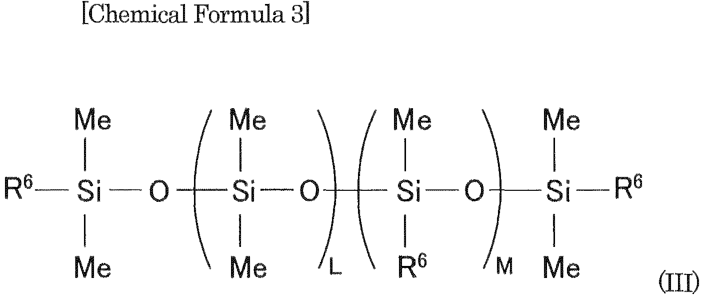

In the above formula,
R⁶s may be the same or different from each other and each represent an alkyl group, phenyl group, epoxy group, acryloyl group, methacryloyl group, alkoxy group, or hydrogen atom, and at least two R⁶s are hydrogen atoms,
L represents an integer of 0 to 1,000 and preferably an integer of 0 to 300, and
M represents an integer of 1 to 200.

### <Curing catalyst (component C)>

A curing catalyst as the component C may be a catalyst used for a hydrosilylation reaction. The curing catalyst may be, for example, a platinum group metal catalyst such as: a platinum-based catalyst like platinum black, platinic chloride, chloroplatinic acid, a reaction product of chloroplatinic acid and monohydric alcohol, a complex of chloroplatinic acid with any olefin or vinylsiloxane, a complex of platinum with vinyldisiloxane, or platinum bisacetoacetate; a palladium-based catalyst; or a rhodium-based catalyst. Normally, a platinum group metal catalyst is contained in a two-component type curing silicone polymer. Even when the thermally conductive composition of the present invention contains a two-component type curing silicone polymer, it is preferable to further add a platinum group metal catalyst to the thermally conductive composition of the present invention. The purpose of adding the platinum group metal catalyst is to control the curing rate of the thermally conductive composition.

In the thermally conductive composition, the curing catalyst is contained in an amount of, for example, 0.01 to 1000 parts by mass, preferably 0.1 to 100 parts by mass, and more preferably 0.5 to 50 parts by mass with respect to 100 parts by mass of the matrix resin (component A).

### <Thermally conductive particles (component B)>

The thermally conductive particles (component B) include the following components B-1, B-2, B-3, and B-4, and
the thermally conductive particles (component B) include, relative to the total amount of the thermally conductive particles (component B) taken as 100 mass%:
10 to 20 mass% of aluminum nitride having a median diameter (D50) of less than 20 µm (component B-1);
3 to 9 mass% of aluminum nitride having a median diameter (D50) of 20 µm or more (component B-2);
50 to 60 mass% of alumina having a median diameter (D50) of 60 to 80 µm (component B-3); and
11 to 37 mass% of alumina having a median diameter (D50) of less than 60 µm (component B-4).

Preferably, the thermally conductive particles (component B) include, relative to the total amount of the thermally conductive particles (component B) taken as 100 mass%:
10 to 18 mass% of the aluminum nitride having a median diameter (D50) of less than 20 µm (component B-1);
3.5 to 8.5 mass% of the aluminum nitride having a median diameter (D50) of 20 µm or more (component B-2);
50 to 58 mass% of the alumina having a median diameter (D50) of 60 to 80 µm (component B-3); and
15 to 35 mass% of the alumina having a median diameter (D50) of less than 60 µm (component B-4).

More preferably, the thermally conductive particles (component B) include, relative to the total amount of the thermally conductive particles (component B) taken as 100 mass%:
10 to 16 mass% of the aluminum nitride having a median diameter (D50) of less than 20 µm (component B-1);
4 to 8 mass% of the aluminum nitride having a median diameter (D50) of 20 µm or more (component B-2);
51 to 58 mass% of the alumina having a median diameter (D50) of 60 to 80 µm (component B-3); and
20 to 33 mass% of the alumina having a median diameter (D50) of less than 60 µm (component B-4).

In the present invention, as the thermally conductive particles (component B), a plurality of types of thermally conductive inorganic particles with different average particle sizes are used in combination. The thermally conductive particles with such a composition can be filled in the matrix resin in an almost densest possible state because small-size thermally conductive inorganic particles fill the gaps between large-size thermally conductive inorganic particles, and this allows a cured product of the thermally conductive composition to have a high thermal conductivity. Also, the above composition can yield a thermally conductive composition that turns into a cured product having a low degree of plasticity and good formability. Moreover, a cured product of the thermally conductive composition with the above composition can be formed into a heat dissipating sheet (thermal interface material: TIM) that has a low compressive load and is superior to putty-like materials in terms of handleability.

The blending ratio (B-1)/(B-2) of the component B-1 to the component B-2 in terms of mass is 1.2 to 3, preferably 1.3 to 2.9, and more preferably 1.3 to 2.8. The above-described blending ratio allows a cured product of the thermally conductive composition to have a high thermal conductivity with the compressive load and the degree of plasticity being kept low.

The thermally conductive particles (component B) are blended in an amount of 1500 to 3000 parts by mass with respect to 100 parts by mass of the matrix resin (component A). The amount of the thermally conductive particles (component B) to be blended is preferably 1700 to 2800 parts by mass and more preferably 2000 to 2500 parts by mass with respect to 100 parts by mass of the matrix resin (component A). The above-described blending ratio allows a cured product of the thermally conductive composition to have a high thermal conductivity with the compressive load and the degree of plasticity being kept low.

The components B-1, B-2, and B-4 are preferably roundish or irregularly-shaped crushed particles. The roundish or irregularly-shaped crushed particles are preferable because they are readily available. Hereinafter, "irregularly-shaped crushed" is also referred to simply as "irregularly-shaped". The component B-3 is preferably spherical. When the component B-3 is spherical, it becomes easier to compound the thermally conductive composition.

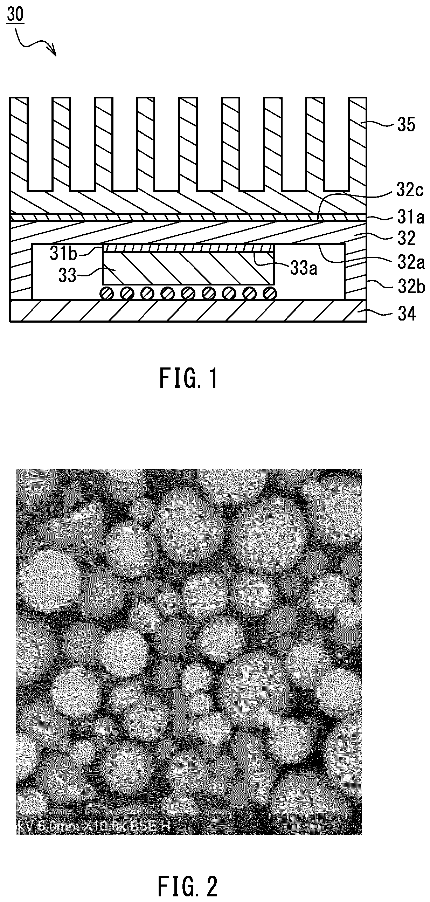

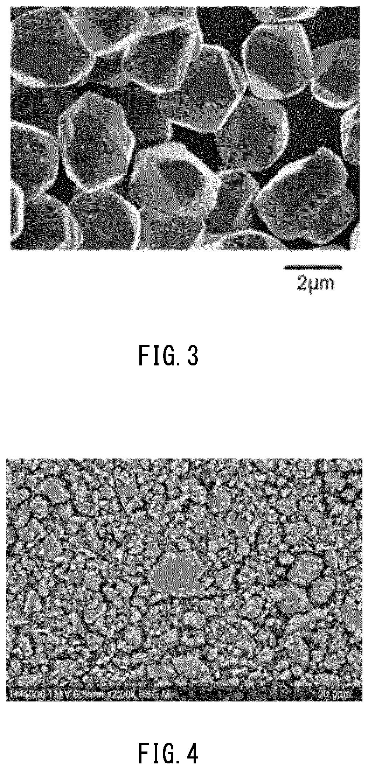

In the thermally conductive particles (component B), the value of the total mass of alumina/the total mass of aluminum nitride is preferably 4 to 5.5 and more preferably 4.1 to 5.3. The above-described value is preferable because the cost for producing the thermally conductive composition can be reduced by increasing the total mass of alumina. FIG. 2 shows a scanning electron microscope (SEM) image of spherical alumina (B-3, D50 = 75 µm) used in the present invention, FIG. 3 shows a scanning electron microscope (SEM) image of roundish AlN (B-1, D50 = 5 µm) used in the present invention, and FIG. 4 shows a scanning electron microscope (SEM) image of irregularly-shaped alumina (B-4, D50 = 4 µm).

### <Other additives>

The thermally conductive composition of the present invention may contain components other than the above-described components, when necessary. For example, a heat resistance improver (such as colcothar, titanium oxide, or cerium oxide), a flame retardant auxiliary, and a curing retarder may be added to the thermally conductive composition. Moreover, an organic or inorganic pigment may be added to the thermally conductive composition for the purpose of coloring and toning. The silane coupling agent as described above may also be added to the thermally conductive composition.

### <Thermally conductive composition (compound)>

The thermally conductive composition of the present invention can be cured by heating or the like.

The thermal conductivity of a cured product of the thermally conductive composition is preferably 7 W/m·K or more, more preferably 7 to 15 W/m·K, and still more preferably 7 to 14 W/m·K. A cured product having such a thermal conductivity is suitable as a heat dissipating sheet (thermal interface material: TIM).

A cured product of the thermally conductive composition exhibits an instantaneous load value of 1000 N or less, preferably 950 N or less, and more preferably 900 N or less when a piece of the cured product having a diameter of 28.6 mm and a thickness of 2 mm is compressed to 50% in accordance with a measurement method as specified in ASTM D575-91:2012. Such a cured product is easily deformed. Thus, when the cured product is interposed between a heat generating member and a heat dissipator, the physical load on the heat generating member can be reduced. Also, a cured product of the thermally conductive composition exhibits a steady-state load value of 1000 N or less, preferably 950 N or less, and more preferably 900 N or less when a piece of the cured product having a diameter of 28.6 mm and a thickness of 2 mm is compressed to 50% in accordance with a measurement method as specified in ASTM D575-91:2012. Such a cured product is easily deformed. Thus, when the cured product is interposed between a heat generating member and a heat dissipator, the physical load on the heat generating member can be reduced.

The degree of plasticity of the thermally conductive composition after defoaming and before curing is preferably 60 or less, more preferably 10 to 60, still more preferably 20 to 55, and particularly preferably 30 to 50. The thermally conductive composition with such a low degree of plasticity has good formability. The degree of plasticity can be determined in accordance with JIS K 6300-3 and ISO 2007:1991. Specifically, using a Wallace plastometer, a sample is compressed between two metal plates under a predetermined load (100 N) for a predetermined time (15 sec) at a measurement temperature of 25°C, and the degree of plasticity (P₀ = t/t₀ × 100) is calculated by dividing the thickness (t) of the compressed sample by the thickness (to) of the sample before being compressed. The smaller the value P₀, the more flexible the sample. The degree of plasticity after defoaming and before curing is important because the thermally conductive composition after being defoamed is formed into a sheet.

The thermally conductive composition of the present invention that has been formed into a sheet is very versatile and suitable as a TIM. The sheet containing the thermally conductive composition (i.e., thermally conductive sheet) preferably has a thickness in the range from 0.2 to 10 mm.

A method for producing a thermally conductive sheet according to the present invention includes the steps of: vacuum defoaming the thermally conductive composition; rolling the defoamed thermally conductive composition to form the thermally conductive composition into a sheet; and then heat-curing the sheet to produce a thermally conductive sheet. The vacuum defoaming can be performed by defoaming the thermally conductive composition under a reduced pressure of -0.08 to -0.1 Pa for about 5 to 10 minutes. The rolling may be, for example, rolling using rotating rolls or pressing. Of these, rolling using rotating rolls is preferable because it enables continuous production.

A dielectric breakdown voltage (JIS K 6249) of the thermally conductive composition is preferably 7 to 16 kV/mm. This allows a thermally conductive sheet with high electrical insulation properties to be obtained by curing the thermally conductive composition.

The volume resistivity (JIS K 6249) of the thermally conductive composition is preferably 10¹⁰ to 10¹⁴ Ω·cm. This allows a thermally conductive sheet with high electrical insulation properties to be obtained by curing the thermally conductive composition.

The thermally conductive composition of the present invention is, for example, preferably an addition reaction-type silicone composition (uncured composition), and more preferably a compound having the following composition.

### (Component A) Matrix resin

The matrix resin contains the following (A1) and (A2):
(A1) a base polymer component: a linear organopolysiloxane having at least two silicon-bonded alkenyl groups per molecule; and
(A2) a crosslinking component: an organohydrogenpolysiloxane having at least two SH groups per molecule, and the number of moles of the organohydrogenpolysiloxane is less than 1 mole with respect to 1 mole of the silicon-bonded alkenyl groups contained in the component A1.

In addition to the above-described components (A1) and (A2), the matrix resin may further contain an organopolysiloxane having no reactive group, such as, for example, an unreacted silicone oil, e.g., dimethylpolysiloxane.

The total amount of the base polymer component (A1), the crosslinking component (A2), the unreacted silicone oil, and the silane coupling agent is taken as 100 parts by mass.

The curing catalyst (component B) and the thermally conductive particles (component C) are as described above.

(C) Platinum group metal catalyst: 0.01 to 1000 ppm by mass with respect to the matrix resin (component A)

(D) Other additives: a silane coupling agent, curing retarder, coloring agent, etc. in any desired amounts

The present invention will be described below with reference to the drawings. In the drawings to be described below, the same reference numerals denote the same components. FIG. 1 is a schematic cross-sectional view illustrating a heat dissipation structure 30 in which thermally conductive sheets of an embodiment of the present invention are incorporated. A thermally conductive sheet 31b, which is a component for dissipating heat generated by an electronic component 33 such as a semiconductor device, is fixed to a main surface 32a of a heat spreader 32 facing the electronic component 33 and is sandwiched between the electronic component 33 and the heat spreader 32. Further, a thermally conductive sheet 31a is sandwiched between the heat spreader 32 and a heat sink 35. The thermally conductive sheets 31a and 31b and the heat spreader 32 constitute a heat dissipating member that serves to dissipate heat from the electronic component 33. The heat spreader 32 is in the form of, for example, a rectangular plate, and has the main surface 32a facing the electronic component 33 and side walls 32b extending vertically from the perimeter of the main surface 32a. In the heat spreader 32, the thermally conductive sheet 31b is provided on the main surface 32a surrounded by the side walls 32b. On the other surface 32c of the heat spreader 32, which is on the side opposite to the main surface 32a, the heat sink 35 is provided via the thermally conductive sheet 31a. The electronic component 33 is, for example, a semiconductor device such as a BGA and is mounted on a wiring board 34.

The present invention includes the following embodiments.

[Item 1] A thermally conductive composition containing:
a matrix resin (component A) made of a thermosetting resin;
a curing catalyst; and
thermally conductive particles (component B),
wherein the thermally conductive particles (component B) are blended in an amount of 1500 to 3000 parts by mass with respect to 100 parts by mass of the matrix resin (component A),
the thermally conductive particles (component B) include the following components B-1, B-2, B-3, and B-4,
the thermally conductive particles (component B) include, relative to a total amount of the thermally conductive particles (component B) taken as 100 mass%:
   10 to 20 mass% of aluminum nitride having a median diameter (D50) of less than 20 µm (component B-1);
   3 to 9 mass% of aluminum nitride having a median diameter (D50) of 20 µm or more (component B-2);
   50 to 60 mass% of alumina having a median diameter (D50) of 60 to 80 µm (component B-3); and
   11 to 37 mass% of alumina having a median diameter (D50) of less than 60 µm (component B-4), and
   a blending ratio (B-1)/(B-2) of the component B-1 to the component B-2 in terms of mass is 1.2 to 3.

[Item 2] The thermally conductive composition according to item 1, wherein a cured product of the thermally conductive composition has a thermal conductivity of 7 W/m·K or more, preferably 7 to 15 W/m·K, and more preferably 7 to 15 W/m·K.

[Item 3] The thermally conductive composition according to item 1 or 2, wherein a cured product of the thermally conductive composition exhibits an instantaneous load value of 1000 N or less, preferably 950 N or less, and more preferably 900 N or less when a piece of the cured product having a diameter of 28.6 mm and a thickness of 2 mm is compressed to 50% in accordance with a measurement method as specified in ASTM D575-91:2012.

[Item 4] The thermally conductive composition according to any one of items 1 to 3, wherein a degree of plasticity of the thermally conductive composition after defoaming and before curing is 60 or less, preferably 10 to 60, more preferably 20 to 55, and still more preferably 30 to 50.

[Item 5] The thermally conductive composition according to any one of items 1 to 4, wherein the thermosetting resin is preferably selected from the group consisting of a silicone resin, an epoxy resin, a phenol resin, an unsaturated polyester resin, a melamine resin, an acrylic resin, a silicone resin, and a fluorocarbon resin, and is more preferably a silicone resin.

[Item 6] The thermally conductive composition according to any one of items 1 to 5, wherein the matrix resin is at least one selected from the group consisting of an addition curable silicone polymer, a peroxide curable silicone polymer, and a condensation silicone polymer.

[Item 7] The thermally conductive composition according to any one of items 1 to 6, wherein the matrix resin preferably further contains a silane coupling agent, and the silane coupling agent is preferably blended in an amount of 0.1 to 10 parts by mass with respect to 100 parts by mass of the matrix resin.

[Item 8] The thermally conductive composition according to item 7, wherein the silane coupling agent is a silane compound represented by a formula R(CH₃)ₐSi(OR')₄₋ₐ (where R is an unsubstituted or substituted organic group having 1 to 20 carbon atoms, R' is an alkyl group having 1 to 4 carbon atoms, and a is 0 or 1) or a partial hydrolysate thereof, and preferably is methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, or octadecyltriethoxysilane.

[Item 9] The thermally conductive composition according to any one of items 1 to 8, wherein the thermally conductive particles (component B) preferably include, relative to the total amount of the thermally conductive particles (component B) taken as 100 mass%:
10 to 18 mass% of the aluminum nitride having a median diameter (D50) of less than 20 µm (component B-1);
3.5 to 8.5 mass% of the aluminum nitride having a median diameter (D50) of 20 µm or more (component B-2);
50 to 58 mass% of the alumina having a median diameter (D50) of 60 to 80 µm (component B-3); and
15 to 35 mass% of the alumina having a median diameter (D50) of less than 60 µm (component B-4), and
the thermally conductive particles (component B) more preferably include, relative to the total amount of the thermally conductive particles (component B) taken as 100 mass%:
   10 to 16 mass% of the aluminum nitride having a median diameter (D50) of less than 20 µm (component B-1);
   4 to 8 mass% of the aluminum nitride having a median diameter (D50) of 20 µm or more (component B-2);
   51 to 58 mass% of the alumina having a median diameter (D50) of 60 to 80 µm (component B-3); and
   20 to 33 mass% of the alumina having a median diameter (D50) of less than 60 µm (component B-4).

[Item 10] The thermally conductive composition according to any one of items 1 to 9, wherein the blending ratio (B-1)/(B-2) of the component B-1 to the component B-2 in terms of mass is preferably 1.3 to 2.9 and more preferably 1.3 to 2.8.

[Item 11] The thermally conductive composition according to any one of items 1 to 10, wherein the thermally conductive particles (component B) are blended in an amount of preferably 1700 to 2800 parts by mass and more preferably 2000 to 2500 parts by mass with respect to 100 parts by mass of the matrix resin (component A).

[Item 12] The thermally conductive composition according to any one of items 1 to 11, wherein the components B-1, B-2, and B-4 are roundish or irregularly-shaped crushed particles, and the component B-3 is spherical.

[Item 13] The thermally conductive composition according to any one of items 1 to 12, wherein, in the thermally conductive particles (component B), the value of a total mass of the alumina/the total mass of the aluminum nitride is preferably 4 to 5.5 and more preferably 4.1 to 5.3.

[Item 14] The thermally conductive composition according to any one of items 1 to 13, wherein the matrix resin contains a base polymer component (component A1) and a crosslinking component (A2).

[Item 15] The thermally conductive composition according to any one of items 1 to 14, wherein the base polymer component is an organopolysiloxane having two or more silicon-bonded alkenyl groups per molecule, preferably an organopolysiloxane having two or more silicon-bonded alkenyl groups per molecule, in which the alkenyl groups are each an alkenyl group having 2 to 8 carbon atoms, in particular 2 to 6 carbon atoms, such as a vinyl group or an allyl group, and more preferably an organopolysiloxane having alkenyl groups bonded to silicon atoms at both ends of a molecular chain per molecule as represented by the following general formula (I) or a linear organopolysiloxane having 1 to 3 alkenyl groups on a silicon atom at each end of a molecular chain as represented by the following general formula (II).

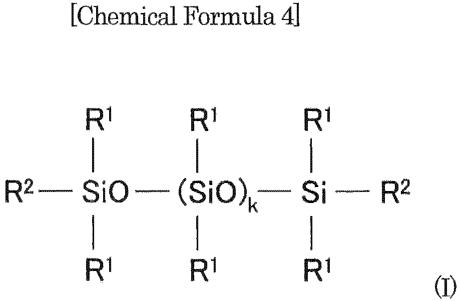

In the above formula,
R¹s may be the same or different from each other and each represent an unsubstituted or substituted monovalent hydrocarbon group having no aliphatic unsaturated bond,
R² represents an alkenyl group, and
k represents 0 or a positive integer.

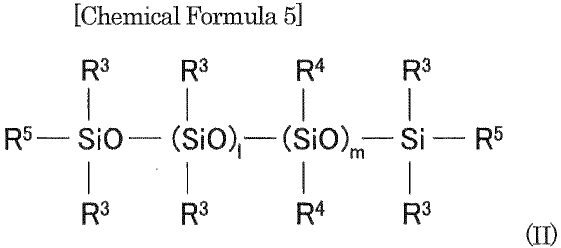

In the above formula,
R³s may be the same or different from each other and each represent an unsubstituted or substituted monovalent hydrocarbon group, and at least one R³ is an alkenyl group,
R⁴s may be the same or different from each other and each represent an unsubstituted or substituted monovalent hydrocarbon group having no aliphatic unsaturated bond,
R⁵ represents an alkenyl group, and
l and m each independently represent 0 or a positive integer.

[Item 16] The thermally conductive composition according to any one of items 1 to 15, wherein the crosslinking component is an organohydrogenpolysiloxane, preferably an organohydrogenpolysiloxane having two or more silicon-bonded hydrogen atoms (i.e., SiH groups) per molecule, and more preferably an organohydrogenpolysiloxane represented by the following general formula (III).

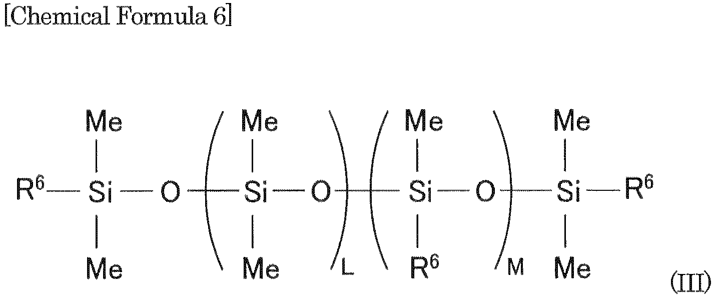

In the above formula,
R⁶s may be the same or different from each other and each represent an alkyl group, phenyl group, epoxy group, acryloyl group, methacryloyl group, alkoxy group, or hydrogen atom, and at least two R⁶s are hydrogen atoms,
L represents an integer of 0 to 1,000 and preferably an integer of 0 to 300, and
M represents an integer of 1 to 200.

[Item 17] The thermally conductive composition according to any one of items 1 to 16, wherein the curing catalyst is a catalyst used for a hydrosilylation reaction, and is preferably a platinum group metal catalyst such as: a platinum-based catalyst like platinum black, platinic chloride, chloroplatinic acid, a reaction product of chloroplatinic acid and monohydric alcohol, a complex of chloroplatinic acid with any olefin or vinylsiloxane, a complex of platinum with vinyldisiloxane, or platinum bisacetoacetate; a palladium-based catalyst; or a rhodium-based catalyst.

[Item 18] The thermally conductive composition is preferably an addition reaction-type silicone composition (uncured composition), and more preferably a compound having the following composition.

### (Component A) Matrix resin

The matrix resin contains the following (A1) and (A2):
(A1) a base polymer component: a linear organopolysiloxane having at least two silicon-bonded alkenyl groups per molecule; and
(A2) a crosslinking component: an organohydrogenpolysiloxane having at least two SH groups per molecule, and the number of moles of the organohydrogenpolysiloxane is less than 1 mole with respect to 1 mole of the silicon-bonded alkenyl groups contained in the component A1.

In addition to the above-described components (A1) and (A2), the matrix resin may further contain an organopolysiloxane having no reactive group, such as, for example, an unreacted silicone oil, e.g., dimethylpolysiloxane.

The total amount of the base polymer component (A1), the crosslinking component (A2), the unreacted silicone oil, and the silane coupling agent is taken as 100 parts by mass.

The curing catalyst (component B) and the thermally conductive particles (component C) are as described in item 1.

(C) Platinum group metal catalyst: 0.01 to 1000 ppm by mass with respect to the matrix resin (component A)

(D) Other additives: a silane coupling agent, curing retarder, coloring agent, etc. in any desired amounts

[Item 19] A thermally conductive sheet including the thermally conductive composition according to any one of items 1 to 18 and having been formed into a sheet.

[Item 20] The thermally conductive sheet according to item 19, having a thickness in a range from 0.2 to 10 mm.

[Item 21] A method for producing a thermally conductive sheet, including the steps of:
vacuum defoaming the thermally conductive composition according to any one of items 1 to 18;
rolling the defoamed thermally conductive composition to form the thermally conductive composition into a sheet; and then
heat-curing the sheet to produce a thermally conductive sheet.

[Item 22] The method for producing a thermally conductive sheet according to item 21, wherein the vacuum defoaming is performed by defoaming the thermally conductive composition under a reduced pressure of -0.08 to -0.1 Pa for about 5 to 10 minutes.

### Examples

The present invention will be described below with reference to examples. It is to be noted, however, that the present invention is not limited to the following examples. Various parameters were measured by methods to be described below.

### <50% compressive load value>

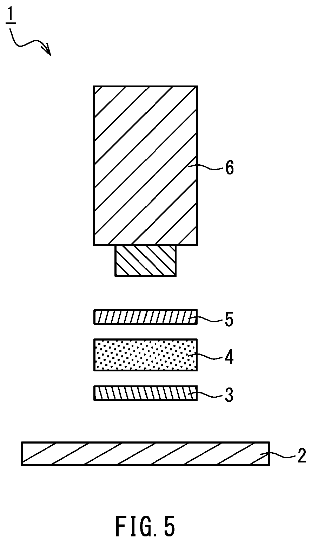

The compressive load was measured in accordance with ASTM D575-91:2012. FIG. 5 is a schematic cross-sectional side view of a compressive load measuring device used in an embodiment of the present invention. This compressive load measuring device 1 includes a sample stage 2 and a load cell 6. A thermally conductive sheet sample 4 was held between aluminum plates 3 and 5 and set as shown in FIG. 5. The thermally conductive sheet sample 4 was then compressed by the load cell 6 until its thickness was reduced to a predetermined thickness. The maximum load value when the sample was compressed to 50% of its thickness ("50% compressive load value (instantaneous)") and the load value after maintaining this compression for 1 minute ("50% compressive load value (steady-state)") were recorded.

### Measurement conditions

Sample: cylindrical shape (with a diameter of 28.6 mm and a thickness of 2 mm)
Compression rate: 50%
Aluminum plate size: circular shape (with a diameter of 28.6 mm) (compression surface)
Rate of compression: 5 mm/min
Compression system: TRIGGER system (in which a point at which a load of 2 N is detected is set to a measurement start position)
Measuring device: MODEL-1310 NW (load cell: 200 kgf) manufactured by Aikoh Engineering Co., Ltd.

### <Thermal conductivity>

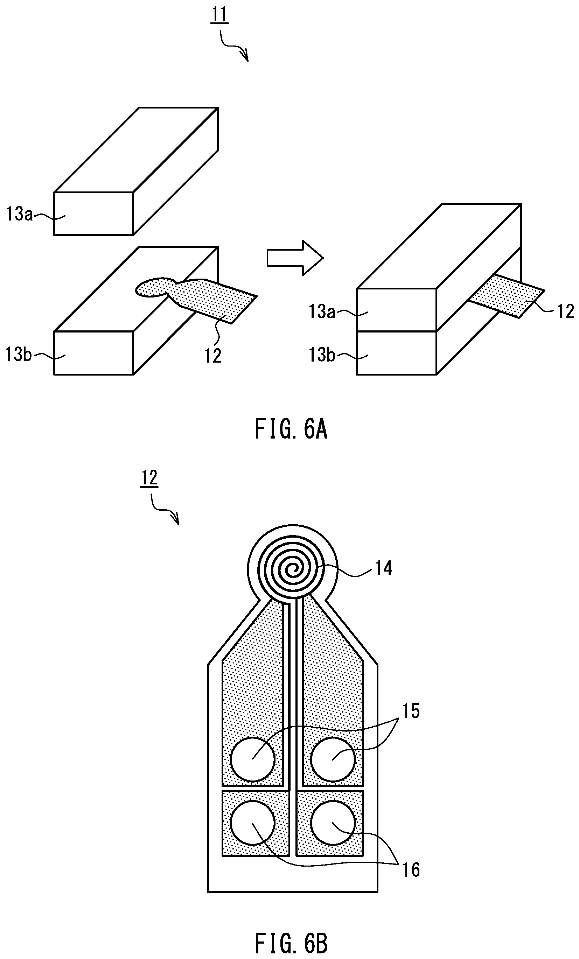

The thermal conductivity of a thermally conductive sheet was measured using a hot disk (in accordance with ISO 22007-2:2008). As shown in FIG. 6A, this thermal conductivity measuring device 11 sandwiches a polyimide film sensor 12 between two thermally conductive sheet samples 13a and 13b, applies a constant power to the sensor 12 to cause a certain amount of heat generation, and analyzes thermal characteristics based on the value of the temperature rise of the sensor 12. The sensor 12 has a tip 14 with a diameter of 7 mm. As shown in FIG. 6B, the tip 14 has a double spiral electrode structure, and electrodes 15 for applied current and electrodes 16 for resistance value (temperature measurement electrode) are arranged in a lower portion of the sensor 12. The thermal conductivity was calculated as per the following equation (Formula 1). $λ = \frac{Po ⋅ D \left(τ\right)}{{π}^{3 / 2} ⋅ r} ⋅ \frac{D \left(τ\right)}{ΔT \left(τ\right)}$
- λ:: Thermal conductivity (W/m·K)
- P₀:: Constant power (W)
- r:: Radius of sensor (m)
- *τ:*: $\sqrt{α ⋅ t / {r}^{2}}$
- α:: Thermal diffusivity of sample (m²/s)
- t:: Measuring time (s)
- D(τ):: Dimensionless function of τ
- ΔT(τ):: Temperature rise of sensor (K)

### <Degree of plasticity>

The degree of plasticity was determined in accordance with JIS K 6300-3 and ISO 2007:1991. Using a Wallace plastometer, a thermally conductive composition was compressed between two metal plates under a predetermined load (100 N) for a predetermined time (15 sec) at a measurement temperature of 23°C. The degree of plasticity (P₀ = t/t₀ × 100) was calculated by dividing the thickness (t) of the compressed thermally conductive composition by the thickness (t₀) of the thermally conductive composition before being compressed. The larger the value P₀, the more flexible the thermally conductive composition. The degree of plasticity after defoaming and before curing is the degree of plasticity of the thermally conductive composition (compound) that has been defoamed for 5 minutes under reduced pressure of -0.1 Pa.

### (Examples 1 to 6 and Comparative Examples 1 to 7)

### 1. Material components

### (1) Matrix resin (component A)

A commercially available two-component type room temperature addition curable silicone polymer (silicone component) containing a polyorganosiloxane was used. One of the components (solution A) contained a base polymer component (polyorganosiloxane, the component A1 as part of the component A) and a platinum group metal catalyst. The other component (solution B) contained a base polymer component (polyorganosiloxane, the component A1 as part of the component A) and an organohydrogenpolysiloxane as a crosslinking component (the component A2 as part of the component A). The ratio between the solution A and the solution B is A:B = 100:100 in terms of mass ratio. By mixing the solutions together at room temperature, this two-component type room temperature addition curable silicone polymer turns to a silicone resin through an addition-curing reaction.

### (2) Thermally conductive particles (components B-1 to B-4)

The thermally conductive particles shown in Table 1 were used. The average particle size is a median diameter (D50) in a volume-based cumulative particle size distribution measured by a laser diffraction/scattering method. A measuring instrument to be used in this method may be, for example, a laser diffraction/scattering particle size distribution analyzer LA-950 S2 manufactured by HORIBA, Ltd. In Table 1, AlN is an abbreviation for aluminum nitride.
- B-1: roundish aluminum nitride (D50 = 5 µm)
- B-1: irregularly-shaped aluminum nitride (D50 = 15 µm)
- B-2: roundish aluminum nitride (D50 = 20 µm)
- B-2: roundish aluminum nitride (D50 = 30 µm)
- B-2: roundish aluminum nitride (D50 = 70 µm)
- B-2: roundish aluminum nitride (D50 = 100 µm)
- B-3: spherical alumina (D50 = 75 µm)
- B-4: irregularly-shaped alumina (D50 = 0.3 µm)
- B-4: irregularly-shaped alumina (D50 = 0.7 µm)
- B-4: irregularly-shaped alumina (D50 = 4.0 µm)
- B-4: irregularly-shaped alumina (D50 = 2.2 µm)

### (3) Curing catalyst (component C)

A platinum-vinyldisiloxane complex (platinum group metal catalyst) was used as the curing catalyst (component C). As described above, the two-component type curing silicone polymer (silicone component) contained a platinum group metal catalyst. When preparing thermally conductive compositions of the respective Examples, an additional platinum group metal catalyst was added to the thermally conductive compositions to ensure sufficient curing of the polyorganosiloxane.

### (4) Silane coupling agent

Decyltrimethoxysilane was used as the silane coupling agent.

### 2. Thermally conductive composition (compound)

The respective materials in amounts shown in Table 1 were weighed, and they were mixed in a mixer to obtain a thermally conductive composition. The thus-obtained thermally conductive composition was defoamed under a reduced pressure of -0.1 Pa for 5 minutes.

### 3. Sheet forming process

The thermally conductive composition was sandwiched between polyethylene terephthalate (PET) films that had been subjected to a release treatment, and then was formed into a sheet having a thickness of 2.0 mm by rolling using even-speed rolls. In this state, the composition in the form of sheet was heat-cured at 100°C for 10 minutes to obtain a thermally conductive sheet (thermally conductive silicone rubber sheet). The formability was evaluated as "formable" when sheet forming under the above-described conditions was possible and as "failed" when sheet forming under the above-described conditions was not possible.

Table 1 shows the conditions of Examples and the results obtained, and Table 2 shows the conditions of Comparative Examples and the results obtained. The amount of each material shown in Tables 1 and 2 is the amount (parts by mass) when the amount of the matrix resin (component A, the two-component type room temperature curing silicone polymer) is taken as 100 parts by mass (100 g).

The matrix resin (component A), the silane coupling agent, and the platinum group metal catalyst all had a specific gravity of 0.98, the alumina (components B-3 and B-4) had a specific gravity of 3.98, and the aluminum nitride (components B-1 and B-2) had a specific gravity of 3.32.

**[Table 1]**

| | | Ex. 1 | Ex. 2 | Ex. 3 | Ex. 4 | Ex. 5 | Ex. 6 |
|---|---|---|---|---|---|---|---|
| A: Two-component type curable silicone polymer (g) | | 100 | 100 | 100 | 100 | 100 | 100 |
| Silane coupling agent (g) | | 4 | 4 | 4 | 4 | 4 | 4 |
| Platinum group metal catalyst (g) | | 0.5 | 0.5 | 0.5 | 0.5 | 0.5 | 0.5 |
| B-1: Roundish AlN, D50 = 5 µm (g) | | - | - | - | - | - | 230 |
| B-1: Irregularly-shaped AlN, D50 = 15 µm (g) | | 250 | 220 | 250 | 250 | 250 | - |
| B-2: Roundish AlN, D50 = 20 µm (g) | | 100 | 110 | - | - | - | - |
| B-2: Roundish AlN, D50 = 30 µm (g) | | - | - | 100 | - | - | - |
| B-2: Roundish AlN, D50 = 70 µm (g) | | - | - | - | 100 | - | - |
| B-2: Roundish AlN, D50 = 100 µm (g) | | - | - | - | - | 100 | 150 |
| B-3: Spherical alumina, D50 = 75 µm (g) | | 1200 | 1100 | 1100 | 1100 | 1100 | 1100 |
| B-4: Irregularly-shaped alumina, D50 = 0.3 µm (g) | | 290 | 290 | - | - | - | - |
| B-4: Irregularly-shaped alumina, D50 = 0.7 µm (g) | | - | - | 290 | 290 | 290 | - |
| B-4: Irregularly-shaped alumina, D50 = 4.0 µm (g) | | 280 | - | 280 | 280 | 280 | 280 |
| B-4: Irregularly-shaped alumina, D50 = 2.2 µm (g) | | - | 280 | - | - | - | - |
| Total mass of thermally conductive particles (component B) (B-1 + B-2 + B-3 + B-4) (g) | | 2120 | 2000 | 2020 | 2020 | 2020 | 2050 |
| Total mass of thermally conductive resin composition (g) | | 2224.5 | 2104.5 | 2124.5 | 2124.5 | 2124.5 | 2154.5 |
| Total mass of alumina (B-3 + B-4) (g) | | 1170 | 1670 | 1670 | 1670 | 1670 | 1670 |
| Total mass of AlN (B-1 + B-2) (g) | | 350 | 330 | 350 | 350 | 350 | 380 |
| Parts by mass of component B with respect to 100 parts by mass of component A | | 2120 | 2000 | 2020 | 2020 | 2020 | 2050 |
| Ratio (B-1)/(B-2) in terms of mass | | 2.5 | 2 | 2.5 | 2.5 | 2.5 | 1.5 |
| Relative to total mass of thermally conductive particles (component B) taken as 100 mass% | Total mass% of alumina (X) | 83.5 | 83.5 | 82.7 | 82.7 | 82.7 | 81.5 |
| | B-3: Mass% of alumina, D50 = 60-80 µm | 56.6 | 55.0 | 54.5 | 54.5 | 54.5 | 53.7 |
| | B-4: Mass% of alumina, D50 = less than 60 µm | 26.9 | 28.5 | 28.2 | 28.2 | 28.2 | 27.8 |
| | Total mass of AlN % (Y) | 16.5 | 16.5 | 17.3 | 17.3 | 17.3 | 18.5 |
| | B-1: Mass% of AlN, D50 = less than 20 µm | 11.8 | 11.0 | 12.4 | 12.4 | 12.4 | 11.2 |
| | B-2: Mass% of AlN, D50 = 20 µm or more | 4.7 | 5.5 | 5.0 | 5.0 | 5.0 | 7.3 |
| | X/Y | 5.1 | 5.1 | 4.8 | 4.8 | 4.8 | 4.4 |
| Thermal conductivity (W/mK) | | 8.2 | 8.2 | 8.2 | 8.3 | 8.3 | 7.4 |
| 50% compressive load value (instantaneous) (N) | | 849 | 802 | 830 | 868 | 886 | 860 |
| 50% compressive load value (steady-state) (N) | | 221 | 192 | 220 | 239 | 252 | 222 |
| Degree of plasticity after defoaming and before curing | | 45 | 40 | 42 | 43 | 43 | 42 |
| Formability | | Formable | Formable | Formable | Formable | Formable | Formable |

**[Table 2]**

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| A: Two-component type curable silicone polymer (g) | | 100 | 100 | 100 | 100 | 100 | 100 | 100 |
| Silane coupling agent (g) | | 4 | 4 | 4 | 4 | 4 | 4 | 4 |
| Platinum group metal catalyst (g) | | 0.5 | 0.5 | 0.5 | 0.5 | 0.5 | 0.5 | 0.5 |
| B-1: Roundish AlN, D50 = 5 µm (g) | | - | - | - | - | - | - | - |
| B-1: Irregularly-shaped AlN, D50 = 15 µm (g) | | 370 | 100 | - | - | 270 | 130 | 150 |
| B-2: Roundish AlN, D50 = 20 µm (g) | | - | 250 | 400 | - | 100 | 40 | 100 |
| B-2: Roundish AlN, D50 = 30 µm (g) | | - | - | - | 200 | - | - | - |
| B-2: Roundish AlN, D50 = 70 µm (g) | | - | - | - | 200 | - | - | - |
| B-2: Roundish AlN, D50 = 100 µm (g) | | - | - | - | - | - | - | - |
| B-3: Spherical alumina, D50 = 75 µm (g) | | 1100 | 1100 | 1100 | 1100 | 800 | 1000 | 1400 |
| B-4: Irregularly-shaped alumina, D50 = 0.3 µm (g) | | 290 | 290 | - | 290 | 290 | 290 | 290 |
| B-4: Irregularly-shaped alumina, D50 = 0.7 µm (g) | | - | - | 300 | - | - | - | - |
| B-4: Irregularly-shaped alumina, D50 = 4.0 µm (g) | | 280 | - | 290 | 280 | 280 | 280 | 280 |
| B-4: Irregularly-shaped alumina, D50 = 2.2 µm (g) | | - | 280 | - | - | - | - | - |
| Total mass of thermally conductive particles (component B) (B-1 + B-2 + B-3 + B-4) (g) | | 2040 | 2020 | 2090 | 2070 | 1740 | 1740 | 2220 |
| Total mass of thermally conductive resin composition (g) | | 2144.5 | 2124.5 | 2194. | 2174.5 | 1844.5 | 1844.5 | 2324.5 |
| Total mass of alumina (B-3 + B-4) (g) | | 1670 | 1670 | 1690 | 1670 | 1370 | 1570 | 1970 |
| Total mass of AlN (B-1 + B-2) (g) | | 370 | 350 | 400 | 400 | 370 | 170 | 250 |
| Parts by mass of component B with respect to 100 parts by mass of component A | | 2040 | 2020 | 2090 | 2070 | 1740 | 1740 | 2220 |
| Ratio (B-1)/(B-2) in terms of mass | | - | 0.4 | 0 | 0 | 2.7 | 3.3 | 1.5 |
| Relative to total mass of thermally conductive particles (component B) taken as 100 mass% | Total mass% of alumina (X) | 81.9 | 82.7 | 80.9 | 80.7 | 78.7 | 90.2 | 88.7 |
| | B-3: Mass% of alumina, D50 = 60-80 µm | 53.9 | 54.5 | 52.6 | 53.1 | 46.0 | 57.5 | 63.1 |
| | B-4: Mass% of alumina, D50 = less than 60 µm | 28.0 | 28.2 | 28.3 | 27.6 | 32.7 | 32.7 | 25.6 |
| | Total mass of AlN % (Y) | 18.1 | 17.3 | 19.1 | 19.3 | 21.3 | 9.8 | 11.3 |
| | B-1: Mass% of AlN, D50 = less than 20 µm | 18.1 | 5.0 | 0 | 0 | 15.5 | 7.5 | 6.8 |
| | B-2: Mass% of AlN, D50 = 20 µm or more | 0 | 12.4 | 19.1 | 19.3 | 5.7 | 2.3 | 4.5 |
| | X/Y | 4.5 | 4.8 | 4.2 | 4.2 | 3.7 | 9.3 | 7.8 |
| Thermal conductivity (W/mK) | | 7.3 | 7.5 | 7.5 | *1 | 6.5 | 6.4 | *1 |
| 50% compressive load value (instantaneous) (N) | | 1325 | 2928 | 4279 | *1 | 500 | 668 | *1 |
| 50% compressive load value (steady-state) (N) | | 597 | 1376 | 2280 | *1 | 167 | 259 | *1 |
| Degree of plasticity after defoaming and before curing | | 65 | 99 | 99 | *1 | 36 | 35 | *1 |
| Formability | | Failed | Failed | Failed | Failed | Formable | Formable | Failed |

| | | | | | | | | |
|---|---|---|---|---|---|---|---|---|
| *1: Unmeasurable due to failure in compounding | | | | | | | | |

The following can be seen from Tables 1 and 2.
(1) The thermally conductive sheets of Examples 1 to 5 exhibited higher thermal conductivities, lower compressive loads, and lower degrees of plasticity after defoaming and before curing than the thermally conductive sheets of Comparative Examples 1 to 6.
(2) In Examples 1 and 2 in which two types of aluminum nitrides with different particle sizes (the components B-1 and B-2) were used in combination, the thermally conductive sheets exhibited lower load values than the thermally conductive sheet of Comparative Example 1 (in which only the component B-1 was used).
(3) As can be seen from Examples 1, 3, 4, and 5, changing the component (B-2) having a large particle size did not affect the load values of the thermally conductive sheets.
(4) As can be seen from Comparative Examples 1, 3, and 4, in the case where the component (B-1) or (B-2) was not contained or two types of components (B-2) were contained, the thermally conductive sheets exhibited high load values or compounding to obtain the thermally conductive composition could not be successfully achieved.
(5) In Comparative Example 5 (the content of the component (B-3) was below the specified range) and Comparative Example 6 (the content of the component (B-1) was below the specified range), both the thermal conductivity and the load values of the thermally conductive sheets were reduced.

The thermally conductive composition and thermally conductive sheet of the present invention are suitable as a heat dissipating sheet (thermal interface material: TIM) to be interposed between a heat generating member and a heat dissipator in electrical and electronic components and the like.

### Description of Reference Numerals

- 1: Compressive load measuring device
- 2: Sample stage
- 3, 5: Aluminum plate
- 4: Thermally conductive sheet sample
- 6: Load cell
- 11: Thermal conductivity measuring device
- 12: Sensor
- 13a, 13b: Thermally conductive sheet sample
- 14: Tip of sensor
- 15: Electrode for applied current
- 16: Electrode for resistance value (temperature measurement electrode)
- 30: Heat dissipation structure
- 31a, 31b: Thermally conductive sheet
- 32: Heat spreader
- 32b: Side wall of heat spreader
- 33: Electronic component
- 34: Wiring board
- 35: Heat sink

## Claims

1. A thermally conductive composition comprising:
a matrix resin (component A) made of a thermosetting resin;
a curing catalyst; and
thermally conductive particles (component B),
wherein the thermally conductive particles (component B) are blended in an amount of 1500 to 3000 parts by mass with respect to 100 parts by mass of the matrix resin (component A),
the thermally conductive particles (component B) comprise the following components B-1, B-2, B-3, and B-4,
the thermally conductive particles (component B) comprise, relative to a total amount of the thermally conductive particles (component B) taken as 100 mass%:
10 to 20 mass% of aluminum nitride having a median diameter (D50) of less than 20 µm (component B-1);
3 to 9 mass% of aluminum nitride having a median diameter (D50) of 20 µm or more (component B-2);
50 to 60 mass% of alumina having a median diameter (D50) of 60 to 80 µm (component B-3); and
11 to 37 mass% of alumina having a median diameter (D50) of less than 60 µm (component B-4), and
a blending ratio (B-1)/(B-2) of the component B-1 to the component B-2 in terms of mass is 1.2 to 3, wherein the median diameters are measured according to the method described in the description.

2. The thermally conductive composition according to claim 1, wherein a cured product of the thermally conductive composition has a thermal conductivity of 7 W/m·K or more, wherein the thermal conductivity is measured according to the method described in the description.

3. The thermally conductive composition according to claim 1 or 2, wherein a cured product of the thermally conductive composition exhibits an instantaneous load value of 1000 N or less when a piece of the cured product having a diameter of 28.6 mm and a thickness of 2 mm is compressed to 50% in accordance with a measurement method as specified in ASTM D575-91:2012.

4. The thermally conductive composition according to any one of claims 1 to 3, wherein a degree of plasticity of the thermally conductive composition after defoaming and before curing is 60 or less.

5. The thermally conductive composition according to any one of claims 1 to 4, wherein the matrix resin is at least one selected from the group consisting of an addition curable silicone polymer, a peroxide curable silicone polymer, and a condensation silicone polymer.

6. The thermally conductive composition according to any one of claims 1 to 5, wherein a silane coupling agent is further blended in an amount of 0.1 to 10 parts by mass with respect to 100 parts by mass of the matrix resin.

7. The thermally conductive composition according to any one of claims 1 to 6, wherein the components B-1, B-2, and B-4 are roundish or irregularly-shaped crushed particles, and the component B-3 is spherical.

8. A thermally conductive sheet comprising the thermally conductive composition according to any one of claims 1 to 7 and having been formed into a sheet.

9. The thermally conductive sheet according to claim 8, having a thickness in a range from 0.2 to 10 mm.

10. A method for producing a thermally conductive sheet, comprising the steps of:
vacuum defoaming the thermally conductive composition according to any one of claims 1 to 7;
rolling the defoamed thermally conductive composition to form the thermally conductive composition into a sheet; and then
heat-curing the sheet to produce a thermally conductive sheet.

## Patentansprüche

1. Wärmeleitende Zusammensetzung, umfassend:
ein Matrixharz (Komponente A) aus einem duroplastischen Harz;
einen Aushärtungskatalysator; und
wärmeleitende Partikel (Komponente B),
wobei die wärmeleitenden Partikel (Komponente B) in einer Menge von 1500 bis 3000 Masseteilen, bezogen auf 100 Masseteile des Matrixharzes (Komponente A), beigemischt sind,
die wärmeleitenden Partikel (Komponente B) umfassen die folgenden Komponenten B-1, B-2, B-3 und B-4,
die wärmeleitenden Partikel (Komponente B) umfassen, relativ zu einer Gesamtmenge der wärmeleitenden Partikel (Komponente B) von 100 Massen-% Folgendes:
10 bis 20 Massen-% Aluminiumnitrid, das einen Median-Durchmesser (D50) von weniger als 20 µm aufweist (Komponente B-1);
3 bis 9 Massen-% Aluminiumnitrid, das einen Median-Durchmesser (D50) von 20 µm oder mehr aufweist (Komponente B-2);
50 bis 60 Massen-% Aluminiumoxid, das einen Median-Durchmesser (D50) von 60 bis 80 µm aufweist (Komponente B-3); und
11 bis 37 Massen-% Aluminiumoxid, das einen Median-Durchmesser (D50) von weniger als 60 µm aufweist (Komponente B-4), und
ein Beimischungsverhältnis (B-1)/(B-2) der Komponente B-1 zur Komponente B-2, bezogen auf die Masse, von 1,2 bis 3, wobei die Median-Durchmesser nach dem in der Beschreibung beschriebenen Verfahren gemessen werden.

2. Wärmeleitende Zusammensetzung nach Anspruch 1, wobei ein ausgehärtetes Produkt der wärmeleitenden Zusammensetzung eine Wärmeleitfähigkeit von 7 W/m·K oder mehr aufweist, wobei die Wärmeleitfähigkeit nach dem in der Beschreibung beschriebenen Verfahren gemessen wird.

3. Wärmeleitende Zusammensetzung nach Anspruch 1 oder 2, wobei ein ausgehärtetes Produkt der wärmeleitenden Zusammensetzung einen Momentanbelastungswert von 1.000 N oder weniger aufweist, wenn ein Stück des ausgehärteten Produkts aufweisend einem Durchmesser von 28,6 mm und eine Dicke von 2 mm in Übereinstimmung mit einem in ASTM D575-91:2012 spezifizierten Messverfahren auf 50 % komprimiert wird.

4. Wärmeleitende Zusammensetzung nach einem der Ansprüche 1 bis 3, wobei der Plastizitätsgrad der wärmeleitenden Zusammensetzung nach dem Entschäumen und vor dem Aushärten 60 oder weniger beträgt.

5. Wärmeleitende Zusammensetzung nach einem der Ansprüche 1 bis 4, wobei das Matrixharz mindestens eines ist, das aus der Gruppe ausgewählt ist, bestehend aus einem additionsaushärtbaren Silikonpolymer, einem peroxidaushärtbaren Silikonpolymer und einem Kondensationssilikonpolymer.

6. Wärmeleitende Zusammensetzung nach einem der Ansprüche 1 bis 5, wobei ein Silanhaftvermittler weiter in einer Menge von 0,1 bis 10 Masseteilen, bezogen auf 100 Masseteile des Matrixharzes, beigemischt ist.

7. Wärmeleitende Zusammensetzung nach einem der Ansprüche 1 bis 6, wobei die Komponenten B-1, B-2 und B-4 rundliche oder unregelmäßig geformte zerkleinerte Partikel sind und die Komponente B-3 kugelförmig ist.

8. Wärmeleitende Folie, umfassend die wärmeleitende Zusammensetzung nach einem der Ansprüche 1 bis 7 und die zu einer Folie geformt wurde.

9. Wärmeleitende Folie nach Anspruch 8, aufweisend eine Dicke im Bereich von 0,2 bis 10 mm.

10. Verfahren zum Produzieren einer wärmeleitenden Folie, umfassend die folgenden Schritte
Vakuumentschäumen der wärmeleitenden Zusammensetzung nach einem der Ansprüche 1 bis 7;
Walzen der entschäumten wärmeleitenden Zusammensetzung, um die wärmeleitende Zusammensetzung zu einer Folie zu formen; und anschließend
Wärmeaushärten der Folie, um eine wärmeleitende Folie zu produzieren.

## Revendications

1. Composition thermoconductrice comprenant :
une résine matricielle (composant A) constituée d'une résine thermodurcissable ;
un catalyseur de durcissement ; et
des particules thermoconductrices (composant B),
dans laquelle les particules thermoconductrices (composant B) sont mélangées en une quantité de 1500 parties en masse à 3000 parties en masse par rapport à 100 parties en masse de la résine matricielle (composant A),
les particules thermoconductrices (composant B) comprennent les composants B-1, B-2, B-3 et B-4 suivants,
les particules thermoconductrices (composant B) comprennent, par rapport à une quantité totale des particules thermoconductrices (composant B) prises comme étant de 100 % en masse :
de 10 % à 20 % en masse de nitrure d'aluminium présentant un diamètre médian (D50) de moins de 20 µm (composant B-1) ;
de 3 % à 9 % en masse de nitrure d'aluminium présentant un diamètre médian (D50) de 20 µm ou plus (composant B-2) ;
de 50 % à 60 % en masse d'aluminium présentant un diamètre médian (D50) de 60 µm à 80 µm (composant B-3) ; et
de 11 % à 37 % en masse d'aluminium présentant un diamètre médian (D50) de moins de 60 µm (composant B-4), et
un rapport de mélange (B-1)/(B-2) entre le composant B-1 et le composant B-2 en termes de masse est compris entre 1,2 à 3, dans laquelle les diamètres médians sont mesurés conformément au procédé décrit dans la description.

2. Composition thermoconductrice selon la revendication 1, dans laquelle un produit durci de la composition thermoconductrice présente une conductivité thermique de 7 W/m·K ou plus, dans laquelle la conductivité thermique est mesurée conformément au procédé décrit dans la description.

3. Composition thermoconductrice selon la revendication 1 ou la revendication 2, dans laquelle un produit durci de la composition thermoconductrice présente une valeur de charge instantanée de 1000 N ou moins lorsqu'une partie du produit durci présentant un diamètre de 28,6 mm et une épaisseur de 2 mm est comprimée à 50 % conformément au procédé de mesure spécifié dans l'ASTM D575-91:2012.

4. Composition thermoconductrice selon l'une quelconque des revendications 1 à 3, dans laquelle un degré de plasticité de la composition thermoconductrice après démoussage et avant durcissement est de 60 ou moins.

5. Composition thermoconductrice selon l'une quelconque des revendications 1 à 4, dans laquelle la résine matricielle est au moins l'une choisie dans le groupe consistant en un polymère de silicone durcissable par addition, un polymère de silicone durcissable par peroxyde et un polymère de silicone de condensation.

6. Composition thermoconductrice selon l'une quelconque des revendications 1 à 5, dans laquelle un agent de couplage au silane est en outre mélangé en une quantité de 0,1 partie en masse à 10 parties en masse par rapport à 100 parties en masse de la résine matricielle.

7. Composition thermoconductrice selon l'une quelconque des revendications 1 à 6, dans laquelle les composants B-1, B-2 et B-4 sont des particules broyées rondes ou de forme irrégulière, et le composant B-3 est sphérique.

8. Feuille thermoconductrice comprenant la composition thermoconductrice selon l'une quelconque des revendications 1 à 7 et ayant été formée dans une feuille.

9. Feuille thermoconductrice selon la revendication 8, présentant une épaisseur comprise dans une plage de 0,2 mm à 10 mm.

10. Procédé de production d'une feuille thermoconductrice, comprenant les étapes de :
démoussage sous vide de la composition thermoconductrice selon l'une quelconque des revendications 1 à 7 ;
laminage de la composition thermoconductrice démoussée pour former la composition thermoconductrice en une feuille ; puis
durcissement thermique de la feuille pour produire une feuille thermoconductrice.
